# EUROPEAN PATENT SPECIFICATION

(11) **EP 3 000 627 B1**
(45) Date of publication and mention of the grant of the patent: **30.11.2016**
(21) Application number: 15185836.2
(22) Date of filing: 18.09.2015
(51) Int. Cl.: B60C 25/05, B60C 25/138

(54) **IMPROVED METHOD AND DEVICE FOR FITTING OR REMOVING TYRES ON RIMS**
VERBESSERTES VERFAHREN UND VORRICHTUNG ZUM ANBRINGEN ODER ABNEHMEN VON REIFEN AUF FELGEN
PROCÉDÉ ET DISPOSITIF AMÉLIORÉS POUR MONTER OU DÉMONTER DES PNEUMATIQUES SUR DES JANTES

(30) Priority: 23.09.2014 IT MI20141646
(43) Date of publication of application: 30.03.2016
(60) Divisional application: 16195316.1
(73) Proprietor: Snap-on Equipment S.r.l., 42015 Correggio (RE) (IT)
(72) Inventor: BRAGHIROLI, Francesco, 42122 Reggio Emilia (IT); SOTGIU, Paolo, 41125 Modena (IT)
(74) Representative: Ripamonti, Enrico

(56) References cited:
- EP-A1- 2 353 889
- DE-C1- 4 205 045

## Description

The present invention relates to a method for fitting a tyre onto a rim or for removing a tyre from a rim according to the pre-characterising portion of the main claim.

A device for fitting a tyre onto a rim or for removing a tyre from a rim also forms the object of this invention, according to the pre-characterising portion of the corresponding independent claim.

### Prior art

Devices for fitting a tyre onto a rim or for removing a tyre from a rim comprising an electric motor that drives a shaft of a rotating support onto which the rim is placed are already known from the prior art. These devices, in the present description, will be referred to by way of example as "tyre-changers".

IT-RE97-A-77 describes a tyre-changer that uses an electric motor that can be powered at various supply voltages so as to enable its use in various parts of the world since the electrical supply voltage is different in various countries. The machine described in IT-RE97-A-77 is equipped with a series-wound single-phase electric motor, with a characteristic torque curve that varies depending on the number of revolutions of the motor. As is known, the electric current absorbed from the network by the above-mentioned motor is proportional to the value of resistive torque applied to its output shaft, which in turn is a function of the effort that a tool expends (cooperating with the tyre during the phase of fitting onto or removing from a rim), driven by the above-mentioned motor, when said tool operates between the edge of the rim and that of the tyre.

In order to avoid the risk of damaging the usual rotor brushes of the electric motor, the machine described in IT-RE97-A-77 is equipped with means that limit its absorption of current, keeping it beneath a threshold value pre-set by the manufacturer of the electric motor.

Another device for fitting a tyre onto a rim is shown in IT-MI93-A-304; to be precise, IT-MI93-A-304 shows a device equipped with a rotating plate capable of supporting a rim/tyre assembly or a rim and driven by the output shaft of an electric motor. The electric motor can be activated by a pedal.

According to this prior art, depending on the extent of movement of the pedal in relation to a reference position, an operator is able to modify the intensity of the current with which the electric motor is powered; in this way, he can consequently, with a corresponding operation of the pedal, calibrate the torque generated by the motor and used for the rotational movement of the rotating plate. This calibration can also be achieved by memorising, in an appropriate memory of a control circuit of the motor, several force curves to be applied in the operation between the edge of the rim and that of the tyre, curves that relate to the type of tyre. Control of the current intensity, in order to obtain a calibrated torque corresponding to a particular type of tyre, then occurs on the basis of the curve memorised.

The device described in IT-MI93-A-304 shows a system with three thyristors, capable of performing a phase cut-off command for the supply current, supplied by a three-phase current network. The advantage of this known device is that it protects the tyres from possible damage, in that the operator is able to change the torque of the motor and adapt it to the different requirements depending on the type of tyre, for example by providing a high motor torque for very rigid tyres.

US-A-5196772 discloses a device for fitting a vehicle tyre onto a respective rim. This device is provided with a tool for inserting tyres onto the edge of the rims rotatably arranged in relation to an axis, and with an electric motor for moving the tool for such insertion about the above-mentioned axis. The device comprises current supply means to drive the motor and torque limiters to stop the rotation of the motor when a pre-set torque value transmitted to the tyre-fitting tool exceeds a pre-set safety value capable of preserving the tyre from damage due to any overloads transmitted to the tyre during the fitting operations.

Another device for fitting tyres onto rims is illustrated in EP-A2-1247661. This device comprises: a tool for inserting the tyres onto an edge of corresponding rims, rotating about an axis and mounted at a certain distance from the axis; an electric motor to rotate said tool about the axis; and a device to supply the motor with electric energy. The electrical supply device is connected to a device that limits the torque gradient which, when a pre-set value of the gradient of the torque transmitted by the motor to the tyre insertion tool is exceeded, generates a braking current to stop the rotational motion of the motor.

Lastly, another device to fit a tyre onto a rim or to remove a tyre from a rim is illustrated in EP-A1-2353889. This device comprises an electric motor to rotate a wheel (i.e. the rim/tyre assembly) in relation to an axis that supports it, a control device to deliver a supply current to the electric motor and a measuring device to measure the current absorbed by the motor and to send the corresponding signals to a control device that controls the supply current of the motor on the basis of the speed of rotation and torque demand for the fitting and/or removal operation; said control device is capable of modifying the characteristic of the current supplied to the motor by applying a high peak torque (or "boost function"), when the measured current of the motor exceeds a pre-set limited value at a low speed of rotation for a pre-established time. This known solution, therefore, modifies the current (in particular by changing its frequency and/or amplitude) only in order to generate a high torque when a particular effort of the motor is made, detected when the pre-set current limit is exceeded. This change or rise of the frequency and/or amplitude of the motor current occurs within a pre-set maximum limited value to apply the torque peak.

### Aim of the present invention

The aim of the present invention is to provide a method and device for fitting and/or removing a tyre onto/from a rim that enable a further improvement in the fitting and/or removal process compared to the known solutions, so as to prevent possible damage to the tyre and/or rim.

In particular, an object of the present invention is to provide a method and device for fitting and/or removing a type onto/from a rim which, automatically and without the intervention of an operator, allow said fitting and removal of the tyre to be obtained in an optimum way according to the operating conditions occurring during said fitting and removal.

Another aim of the present invention is to provide a method and device for fitting and/or removing a tyre onto/from a rim that require no previous knowledge of the type of tyre and/or rim, and in particular of the tyre's rigidity characteristics.

Another aim of the present invention is to provide a method and device for fitting and/or removing a tyre onto/from a rim that increase the protection of the mechanical and electrical components of the device, thus improving its reliability and extending its useful life.

Another aim of the present invention is to provide a method and device for fitting and/or removing a tyre onto/from a rim that markedly reduce the fitting and/or removal process times, thus increasing the operator's productivity.

Another aim of the present invention is to provide a method and device for fitting and/or removing a tyre onto/from a rim that improve the overall efficiency of the fitting and/or removal process compared to known solutions, for example in terms of safety, energy consumption, noise, or suchlike.

Lastly, another aim of the present invention is to provide a device for fitting and/or removing a tyre onto/from a rim that is at the same time cheap, efficient, robust and reliable.

These and other aims of the present invention, which will be obvious to a person skilled in the art, are achieved by a method and device according to the accompanying claims.

### The Invention

The invention provides a method for fitting a tyre onto a rim or for removing a tyre from a rim, according to claim 1.

According to this method, the wheel (i.e. the rim/tyre assembly) or the rim only, fitted onto a support, are rotated about an axis by an electric motor, operating on said support; the current that powers the electric motor is continuously controlled, if necessary by varying the supply frequency and/or amplitude and/or voltage, the characteristic of said current being automatically varied in order to impart to the motor an optimum torque/speed combination depending on the fitting/removal operating conditions.

According to the invention, the fitting/removal operating conditions can be continuously measured and automatically adjusted in various ways.

For example, these operating conditions can be continuously measured on the basis of the motor's absorption of electrical current. In fact, the motor's absorption of current can be easily correlated to the resistive torque, generated by the fitting/removal tools while they interact with the tyre to be fitted onto or removed from the rim. Or these fitting/removal operating conditions can be determined by directly measuring the resistive torque applied to the electric motor and generated by the above-mentioned tools.

Furthermore, it is possible to determine the operating conditions by measuring the motor's speed of rotation and correlating this speed with the resistive torque.

Another method for continuously measuring the fitting/removal operating conditions involves the direct and continuous measurement of the mechanical forces transmitted by the tools to the tyre, in particular to the tyre bead, during the fitting/removal operations.

All of these methods of measuring the fitting/removal operating conditions can then be variously combined together, to offer a greater degree of accuracy.

The invention allows an optimum torque/speed combination of the electric motor to be defined in order to perform the fitting/removal operation effectively, that is to define the appropriate combination in order to maximise the motor's speed of rotation, with the same torque required to perform this operation. As stated, according to the invention, the characteristic of the (continuously monitored) current that powers the motor is automatically modified or regulated depending on the operating conditions, with no need for the operator to intervene. Consequently, the speed of rotation of the motor (i.e. its output shaft) is automatically regulated.

The regulation of the speed based on the torque required is important in that, during the fitting/removal operations achieved with known tools, the speed and torque requirements are different depending on the type of tyre fitted and/or removed. In fact, for tyres with high rigidity, a low speed and high torque are often required; for basic operations, however, such as the lubrication of the tyre and/or rim, the rotation of the rotating support to facilitate final extraction of the tyre, etc., high speed and low torque are required.

Furthermore, during the course of the above-mentioned operations, depending on the relative positions (and corresponding interactions) between the above-mentioned tools and the tyres, particularly between the tools and the tyre beads, the torque and speed requirements can vary even for the same tyre.

As is known, in order to be able to perform the fitting/removal operation, the torque delivered by the motor must be the same as the resistive torque. With the same frequency of the supply current, a certain value of the torque delivered corresponds to a certain number of revolutions of the motor: this relation is in fact known and is usually provided by the manufacturer of the electric motor. The invention envisages that by appropriately modulating the value of the frequency, it is therefore possible, with the same torque, to obtain higher speeds from the motor. A similar effect can be achieved, however, not only by means of an appropriate variation of the frequency, but also by varying other supply parameters, for example by altering the amplitude or supply voltage.

Completely automatically and depending on the operating conditions, i.e. the torque delivered when performing the operation, the motor is thus substantially run in optimum torque and speed conditions (i.e. in conditions wherein the speed of the motor is maximised for the same required torque along all the operative range of the motor that is along the whole characteristic working curve of said motor, thus avoiding the need to apply periodically, during the fitting/removal operation, potentially dangerous and in any case stressing, peak torque values. In this way, not only is the integrity of the electric motor safeguarded but wear of the mechanical and electrical components of the tyre-changer as a whole is also reduced and its reliability is improved, thus avoiding the risk of sudden breakages and/or malfunctions and in general prolonging its useful life.

This automatic operation of the electric motor in optimum torque/speed conditions, depending on the operating conditions, also means that there is no need to have prior knowledge of and/or memorise the rigidity characteristics of the tyre: in fact, the electric motor is substantially capable of adjusting itself, during the fitting/removal operation, on the basis of the rigidity characteristics of the tyre.

The automatic operation of the motor, in optimum torque and speed conditions based on the operating conditions, also enables the cycle time of the fitting/removal operation to be reduced as far as possible, also avoiding possible errors in determining the motor torque necessary for this operation, by the operator, errors that could by contrast occur when using a manually-operated system.

What above stated is different from what is described in EP2353889 wherein the characteristic of the current, particularly the frequency and/or the amplitude of the current fed to the motor, is modified only when a control device detects a change of the motor speed by means of a monitoring device connected with said motor, said speed change being due to a corresponding change of the torque request from the tool to the tyre. For example, when said control device detects that the electric motor output shaft (connected with a rotary disc supporting a wheel whose tyre has to be changed) is slowing down for a high torque request, said device starts a "boost" function which provides a torque peak to the electric motor. The current fed to the motor is changed, increasing it till pre-set values.

This prior document however does not disclose a continuous control of the motor speed during the use of a device for the fitting/removal of the tyres in order to have a regulation of the value of the current fed to the motor, in each moment and without to set a threshold limit of current or torque. On the contrary, EP2353889 simply describes that if the electric energy absorption by the motor overcome a threshold value for a pre-set time range period, said feeding current is automatically modified so that a peak value of torque ("boost" function) is offered to the motor for a fixed time period. Said prior patent text does not describe any adjustment of the motor speed according to the torque request nor it can be said that the combination torque/speed corresponding to the "boost" function described by said prior document can be considered as "optimum combination": simply, the method described by said prior document provides to give to the motor, in any case, a peak torque value every time the absorbed current by the motor overcomes a specific thereshold.

According to the invention, having predefined an initial combination of motor frequency and supply voltage, should there be a departure from the optimum operating conditions of the motor, the method of the present invention envisages that, once the corresponding variation in the current absorbed is detected, the supply current is automatically varied as a consequence, for example by varying its frequency and/or amplitude. The new frequency (and/or amplitude) and supply voltage values are matched by new values of the speed of rotation of the motor, with the same torque necessary for completing the fitting/removal operation. An effect similar to the variation of frequency and/or amplitude can be obtained by varying the supply voltage in relation to the network voltage. It is also possible to perform a simultaneous variation of the frequency (and/or amplitude) and supply voltage.

This process of automatic variation of the supply current based on the operating conditions can occur both when it is necessary to run the motor in low torque and high speed conditions and in high torque and low speed conditions; i.e. the automatic modulation of the supply current of the motor can occur in both directions, both with an increase and with a reduction in the speed and/or torque.

According to a preferred embodiment, the electric motor is asynchronous, i.e. a four-pole induction motor for example. The motor's supply can be single-phase, two-phase or three-phase.

According to another embodiment of the present invention, it is possible to deduce the fitting/removal operating conditions by directly measuring the resistive torque applied to the electric motor, or the speed of rotation of the drive shaft. The supply current of the motor is then varied, for example by varying the frequency and/or amplitude and/or supply voltage, based on the torque and/or speed measured, in order to restore the motor to the optimum operating conditions in terms of torque and speed, depending on the actual fitting and/or removal operating conditions.

According to another embodiment of the invention, the fitting/removal operating conditions can be deduced on the basis of the mechanical stresses transmitted to the tyre, in particular to the bead of the tyre, by a tool that interacts with said bead during the fitting/removal operations. The motor's supply current is then varied, for example by varying the frequency and/or amplitude and/or supply voltage, based on the mechanical stresses measured, in order to restore the motor to the optimum operating conditions in terms of torque and speed, depending of the actual fitting and/or removal operating conditions.

Advantageously, it is possible to vary the supply current of the electric motor by using only one or any combination of the above-described measuring methods, in order to achieve greater precision in controlling the supply current of the motor on the basis of the actual fitting/removal operating conditions. For example, it is possible to take into account both a measurement made on the current absorbed by the electric motor and a measurement of the actual speed of rotation of the drive shaft, or the resistive torque applied to the electric motor, or a measurement of the mechanical stresses transmitted to the tyre bead, and combine these input data as desired in order to effectively modulate the supply current in response.

According to another version of the invention, the optimum torque/speed combination of the fitting/removal operation can be selected to improve other characteristics, not necessarily coinciding with maximising the speed. For example, the optimum combination can be chosen to maximise the power delivered by the motor, or to minimise electricity consumption or noise emissions. According to a preferred embodiment of the invention, the operator can select at least one specific operating method of the fitting/removal operation corresponding to at least one different definition of optimum torque/speed combination, depending on requirements.

Furthermore, the invention relates to a device for fitting a tyre onto a rim or for removing a tyre from a rim according to the corresponding independent claim.

The above-mentioned device comprises an electric motor capable of rotating the wheel (tyre/rim assembly), or the rim only, about an axis during the fitting/removal operation, a control device to deliver the supply current to the electric motor and a measuring device to measure the current absorbed by the motor, and to transmit the corresponding signals to a control device that controls the supply current of the motor, varying the frequency and/or amplitude and/or supply voltage so as to automatically apply an optimum torque/speed combination based on the fitting/removal operating conditions.

Advantageously, this device for fitting a tyre onto a rim or for removing a tyre from a rim, known also as a tyre-changer, comprises a speed selector device, for example a pedal, which can be worked manually by the operator, to selectively control the operation of the electric motor according to various configurations.

In a first configuration, for example corresponding to an intermediate position of the pedal (along an operating travel comprising at least two extreme, additional working positions, a first of which corresponding to the deactivation of the motor and the second to its maximum speed), the speed of rotation of the motor, and thus of the wheel and/or rim, is set to a predetermined control and/or working speed. By contrast, in a second configuration, corresponding for example to a position in which the pedal is fully depressed (the second extreme work position), the speed of rotation of the motor, and therefore the wheel and/or rim, is left to vary automatically, in order to optimise the torque and speed characteristics of the motor on the basis of the fitting/removal operating conditions.

Furthermore, it is possible to afford the operator the possibility of operating the tyre-changer automatically in accordance with various modes, corresponding to various definitions of optimum torque/speed combination, for example corresponding to operating conditions of the motor aimed at maximising the speed or power, or at minimising energy consumption or noise emissions. This choice of automatic operation mode can be made by the operator by means of any control device, for example a pushbutton console, connected to the tyre-changer device. Or this choice can be made directly via the pedal, envisaging for this the possibility of offering a plurality of different work positions.

The control device can comprise a microprocessor that controls the operation of the control device operating by means of appropriate power switches, for example electronic contactors or inverters; this control device automatically controls and appropriately varies the motor's supply current.

Preferably, the device also comprises a low-voltage circuit that powers the low-voltage control device and a memory unit, connected to the microprocessor, containing information relating to the torque/speed curves, based on the operating voltage, frequency and/or amplitude, relating to the electric motor installed.

The device of the present invention may comprise means for measuring the resistive torque applied to the motor. These means, for example comprising at least one torque measuring device, a torque meter, accelerometer or other device, are connected to the control device and can be fitted in various positions; for example they can be associated with the rotating support that supports and rotates the wheel or rim, or can be associated with the shaft of the electric motor.

The device of the present invention may also comprise means for measuring the speed of rotation of the drive shaft. These means, for example comprising at least one encoder, are connected to the control device and can be fitted in different positions: for example the encoder (or suchlike) can be associated with the rotating support that supports and rotates the wheel or rim, or can be associated with the shaft of the electric motor.

The device of the present invention may also comprise means for measuring the mechanical stresses transmitted to the tyre, especially to the bead of the tyre, during the fitting/removal operation, by at least one tool that moves said bead. This tool, for example a tool for fitting/removing the tyre onto/from the rim, or a bead-breaker tool, preferably of the rotating disc type, is normally mounted on an appropriate supporting arm of the tyre-changer. These means for measuring the mechanical stresses comprise at least one sensor, for example a strain gauge or other, connected to the control device, and can be associated with the supporting arm of the tool.

These means for measuring the stresses can in fact be located in a plurality of different positions of the tyre-changer device, and not only on the supporting arm of the tool in question. In fact, during the fitting/removal operations, many structural components of the tyre-changer device are subjected to mechanical stresses generated, in the final analysis, by the interaction between the tools and the tyre. Said means for measuring the mechanical stresses generated by the tools/tyre interaction can therefore be mounted in a plurality of different positions on the tyre-changers and/or even on accessories separate from the tyre-changer, that are however placed in contact with the tyre during the fitting/removal operations, for example as illustrated in patent IT-BO2009-A-728.

The invention will now be described in greater detail by means of embodiments given purely by way of non-limiting examples, with reference to the accompanying drawings, in which:
- Figure 1 shows schematically a tyre-changer in which a method according to the invention can be implemented, and
- Figure 2 shows a typical graph representing the relation between frequency, speed and torque of an asynchronous electric motor.

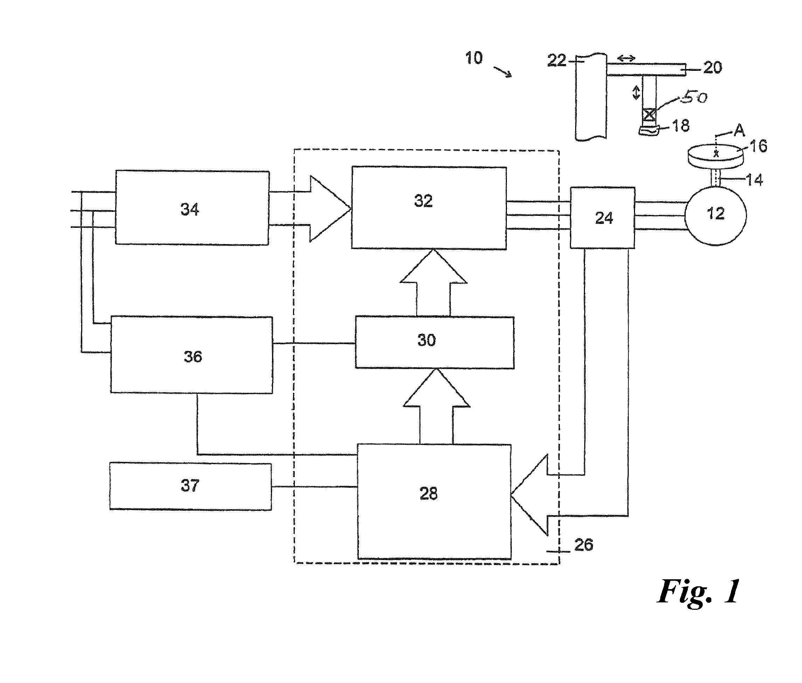

Figure 1 shows schematically a device 10 for fitting/removing tyres onto/from respective rims (device referred to for the sake of brevity, as previously stated, as a tyre-changing machine or simply a tyre-changer) according to the present invention. The tyre-changer 10 comprises an electric motor 12 to operate a drive shaft 14 connected to a rotating support 16, of a known type, onto which is secured and subsequently rotated a wheel (i.e. a rim/tyre assembly) or the rim only, for the tyre fitting/removal operations.

The electric motor is preferably a three-phase motor. As an alternative to a three-phase motor, single- or two-phase motors can also be used. In particular, asynchronous or induction motors can be used. Even more preferably, a four-pole induction motor is used.

On the rotating support 16 tyres can be placed centred in relation to the axis of rotation A of the rotating support 16. Proximate this support is a standard tool 18 capable of cooperating with and for moving the standard bead of the tyre. This tool 18 is mounted on a supporting arm 20 which in turn is connected to a housing, support, for example a post, 22.

The tool 18 for moving the tyre bead is of a known type and can be, for example, a fitting/removal tool, preferably in the shape of a hook, claw or lever. In general, said fitting/removal tool 18 can be of a fixed or movable type and/or hinged in relation to the supporting arm 20. Alternatively, the tool 18 for moving the tyre bead can be a bead-breaker tool, of the rotating disc type for example. Or the tool 18 for moving the bead can be any tool of an auxiliary type, for example having a disc, roller, wedge, etc., capable of cooperating with the tyre bead during the above-mentioned fitting/removal operation.

The motor's power supply, especially the frequency and/or amplitude and/or supply voltage, of the motor 12 is variable, which translates into a different speed of the drive shaft 14.

In order to measure the current absorbed by the electric motor 12, a device 24 for measuring said absorption is connected to the electric motor 12. Since the current actually absorbed by the motor can be easily correlated to the resistive torque applied to the electric motor, this torque can be correctly measured and controlled.

The device 24 is, for example, a Hall-effect sensor, or a current-measurement resistor, or even a current transformer or suchlike.

The measurement device 24 is connected to a control device 26 capable of controlling the motor's supply current on the basis of the speed of rotation and torque required for the fitting and/or removal operation.

The measurement signals generated by the measurement device 24 are then transmitted to the control device 26 which, on the basis of these signals, performs the above-mentioned control.

In particular, the control device 26 is capable of changing the frequency and/or amplitude and/or supply voltage and therefore the supply current of the electric motor 12. This change in the motor's current is useful in that the requests for speed and torque during the fitting and/or removal operations are different depending on the type of tyre fitted and/or removed.

It is in fact known that the lateral walls of tyres have different rigidity. In order to fit/remove tyres with high rigidity, for example of the so-called run flat type, from their rims, low speed and high torque are required; however, for basic operations high speed and low torque are required.

The measuring device 24 is capable of measuring, in an independent and automatic way, when the rotation of the shaft 14 is slowed down due to a strong demand for torque, a condition that usually causes the motor 12 to deviate from an optimum torque/speed combination (or curve). When this happens, on the basis of the measurement by device 24 and the signals generated by it, the control device 26 is capable of automatically modifying the motor's supply current, for example by varying the frequency and/or amplitude and/or supply voltage, and thus rapidly restoring the motor to optimum torque/speed conditions, based on the new fitting/removal operating conditions. This automatic calibration of the motor's operating conditions preferably occurs in a continuous manner without jerks and can occur both when it is necessary to increase the torque and reduce the speed, and in the opposite sense, i.e. when it is necessary to increase the speed and reduce the torque.

The control device 26 comprises a control unit, preferably a microprocessor 28, an interface circuit 30 and a control or command device 32 capable of controlling the motor 12 by intervening on the electrical supply.

The measuring device 24 is connected to the unit or, more simply and usually the microprocessor 28, which receives the signals or data generated by the measuring device 24 indicating the absorption of current by the electric motor 12. Depending on these signals or data, the microprocessor 28 is capable of controlling the control or command device 32 comprising, for example, power switches, for example electronic contactors or inverters, in its turn capable of controlling and regulating the motor's supply current.

The interface circuit 30, positioned between the microprocessor 28 and the control device 32, serves to convert and transmit the commands of the microprocessor 28 to the control device 32. In particular, the interface circuit 30 provides the functions of voltage conversion and interface, as well as providing protection regarding the maximum level of current absorbed by the motor, in order to prevent possible damage thereto.

A time contactor may also be present, associated with the microprocessor 28 and for example incorporated in the interface circuit 30. If the electrical current absorbed by the motor and measured by the measuring device 24 persists for a certain period of time beyond a certain pre-set threshold level, the electrical supply to the motor is deactivated or reduced below an appropriate safety level (for example, the above-mentioned threshold level).

The control device 32 delivers the supply current to the electric motor 12 and, as stated, comprises appropriate supply switches, typically inverter switches, used to operate said motor and positioned between the measuring device 24 and a high-voltage circuit 34; said high voltage circuit 34 supplies the electric motor 12 taking its electrical supply from the network.

Furthermore, a low voltage circuit 36 is provided, comprising a transformer to reduce the voltage, a bridge rectifier, a filter and a voltage regulator, to provide levels of low voltage to the interface circuit 30 and to the circuit of the microprocessor 28.

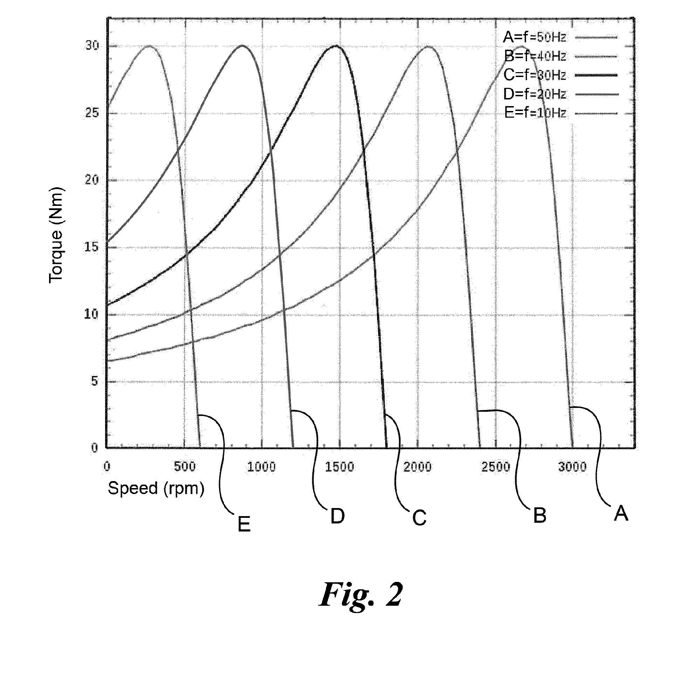

According to a preferred embodiment of the present invention, a memory unit 37 is also provided, connected to the microprocessor 28 and containing information relating to the torque/speed curves based on frequency, amplitude and supply voltage (and therefore on the supply current) and the particular model of electric motor 12 installed on the tyre-changer. Information of this type is illustrated, for example, in Figure 2, which represents a typical torque/speed diagram of a particular asynchronous motor that can be used in the tyre-changer. For a given supply voltage, the torque/speed curves are different depending on the frequency (or amplitude) applied, and make it easy to identify which are the optimum torque/speed combinations of the electric motor, at a certain frequency (or amplitude), and for certain operating conditions. Since these curves are known for each electric motor, in the event of deviation from the optimum operating conditions of said motor, detected by the measuring device 24, the control device 26 will appropriately modulate the frequency (or amplitude) and/or the supply voltage of the motor, to restore the electric motor 12 to optimum operating conditions, in terms of the torque/speed ratio, depending on the new fitting/removal operating conditions.

The tyre-changer 10 may also comprise means for measuring the speed of rotation of the drive shaft 14. These means (not shown in the Figure), for example comprising at least one encoder, are connected to the control device 26 and can be fitted in various positions, for example, the encoder (or suchlike) can be associated with the rotating support 16 that supports and rotates the wheel or rim or can be associated with the shaft 14 of the electric motor 12. The signals or data from this encoder, if present, are sent to the microprocessor 28 and used as a possible alternative or to supplement and enhance the information that can be obtained through the signals from the measuring device 24 correlated to the intensity of the current absorbed by the electric motor 12, in order to increase the accuracy of determining the actual fitting/removal operating conditions.

Similarly, the tyre-changer 10 may also comprise means for measuring the resistive torque applied to the motor (not shown in the Figure). These means, for example comprising at least one torque measuring device, or a torque meter, accelerometer, load cell or suchlike, can, for example, be associated with the tyre-changer at the drive shaft 14 or rotating support 16 and are also connected to the control device 26 and therefore to the microprocessor 28, to send signals or data representative of the resistive torque to said microprocessor. These signals can also be used as a possible alternative or to incorporate and enhance the information that can be obtained by means of the signals from the measuring device 24 on the absorption of current.

Similarly, the tyre-changer 10 may also include means for measuring the mechanical stresses transmitted to the bead of a tyre, during the fitting/removal operations, by the tool 18 that moves said bead. These means for measuring the mechanical stresses comprise at least one sensor 50, for example a strain gauge, which can be mounted on the tyre-changer in various positions. For example, the sensor 50 can be associated with a portion of the supporting arm 20, as shown in Figure 1. However, the sensor 50 can be associated with the tyre-changer at other different positions.

The tyre-changer 10 may also comprise a plurality of sensors 50 or measuring means capable of measuring the mechanical stresses transmitted to the bead of a tyre, arranged in various positions and possibly of various types. The signals or data from at least one sensor 50 are sent to the microprocessor 28 and are also used as an alternative or to supplement and enhance the information that can be obtained by means of the signals from the measuring device 24 correlated to the intensity of the current absorbed by the electric motor 12, in order to increase the accuracy of determining the actual fitting/removal operating conditions.

Preferably, the method according to the present invention envisages that the tyre-changer 10, at the start of the fitting/removal operations, is started in a first configuration in which the speed of rotation of the wheel (rim/tyre assembly) or of the rim only, once fixed to the rotating support 16, is initially set at a pre-determined working speed. For example, the initial speed of the electric motor 12 can correspond to the nominal speed of the motor at 100 Hz, which corresponds to around 3000 rpm for a standard four-pole motor. The speed of the motor is then reduced by means of a reduction unit to around 14 rpm at the drive shaft 14. This initial configuration is achieved, for example, by operating an appropriate and known speed selector device associated with the tyre-changer 10. This device, for example a pedal (not shown in the Figure), can be operated by the operator. Preferably, the initial configuration just described is achieved by positioning the pedal in a first working position, for example in an intermediate position in relation to a stop position and a position of maximum rotation of the motor 12.

When the operator decides to switch to automatic mode, he moves the pedal to a second working position, for example to a completely lowered position along a travel on which said pedal can move. In this configuration, the speed of rotation of the motor, and consequently of the wheel, is determined completely automatically, in order to optimise the torque and speed characteristics of the motor based on the fitting/removal operating conditions, as previously described. In general, the actual speed of the motor can automatically decrease, depending on the conditions, until it corresponds to the nominal speed of the motor at 50 Hz, approximately equivalent to 1500 rpm for a standard four-pole motor. Thanks to the presence of the reducer, this translates to around 7 rpm at the drive shaft 14.

In a more high-performance version, the tyre-changer can instead be operated over a more extended speed range, for example the electric motor can rotate at speeds of between 900 rpm (nominal speed at 20 Hz) and 4500 rpm (nominal speed at 150 Hz). Thanks to the reducer, the speed of the wheel and/or rim mounted on the rotating support 16 will vary between 2.8 rpm and 21 rpm.

In other words, if a standard four-pole induction motor is used, the actual speed of the motor can be varied between a minimum, approximately corresponding to its nominal speed at 20 Hz, i.e. corresponding to around 900 rpm, and a maximum, approximately corresponding to the nominal speed of said motor at 150 Hz, i.e. corresponding to around 4500 rpm.

Since the above-mentioned reducer is normally used, this means that the speed of the main shaft varies between 2.8 rpm and around 21 rpm. More frequently, the frequency range varies between 50 Hz and 100 Hz, corresponding to a motor speed range of between around 1500 rpm and around 3000 rpm, which are usually reduced, at the main shaft, to a range that varies from around 7 rpm to around 14 rpm.

The initial working speed can be set at any speed that can be reached by the electric motor/reducer system, in order to guarantee good ergonomics and practicality and ensure the operator's safety.

Furthermore, the tyre-changer can be configured so as to operate in accordance with various modes, corresponding to various definitions of optimum torque/speed combination, for example corresponding to motor operating conditions aimed at maximising the speed or power, or minimising energy consumption or noise emissions. This choice of automatic operation mode can be made by the operator by means of any control device, for example an appropriate pushbutton console (not shown in the Figures), connected or incorporated into the device for fitting/removing tyres. The control device can also be physically detached from the tyre-changer and capable of communicating with it via a cable or wireless connection.

Alternatively, the choice of automatic operation mode can be made by the operator by acting directly on the above-mentioned speed selector pedal. In this case, said pedal can arrange itself in a plurality of different working positions, corresponding to the different automatic operating configurations adopted on the tyre-changer.

Various embodiments of the invention have been described and referred to. Others can, however, be obtained on the basis of the preceding description and they are to be regarded as falling within the scope of the following claims.

## Claims

1. Method for fitting a tyre onto a rim or removing a tyre from a rim, wherein a wheel or rather a tyre/rim assembly or the rim only is rotated by an electric motor (12), preferably of an asynchronous type, about an axis (A), and wherein the supply current of the electric motor (12) is controlled by varying the frequency and/or amplitude and/or supply voltage of said motor (12), **characterised in that** it is envisaged that a continuous monitoring of said current is carried out and that the supply current is automatically varied in order to impart to the electric motor (12) an optimum torque/speed combination based on the fitting/removal operating conditions, said current variation allowing the motor to operate in conditions wherein its rotational speed is maximised with the requested torque during all its operation period.

2. Method according to claim 1, wherein the fitting/removal operating conditions are measured at least on the basis of the absorption of current by the electric motor (12).

3. Method according to claim 1, wherein the fitting/removal operating conditions are measured at least on the basis of the resistive torque applied to the electric motor (12).

4. Method according to claim 1, wherein the fitting/removal operating conditions are measured at least on the basis of the speed of rotation of the electric motor (12).

5. Method according to claim 1, wherein the fitting/removal operating conditions are measured at least on the basis of the mechanical stresses transmitted by a tool (18) for moving a tyre bead to the said tyre bead.

6. Method according to claim 1, wherein the optimum torque/speed combination is chosen to maximise the speed of the electric motor (12) and/or the power delivered by said motor (12) and/or to minimise the electricity consumption of said motor (12) and/or the operating noise of the electric motor (12).

7. Method according to claim 1, wherein the supply current of the electric motor (12) is automatically varied in order to impart to said motor a speed between a minimum value of around 900 rpm and a maximum value of around 4500 rpm.

8. Device (10) for fitting a tyre onto a rim or for removing a tyre from a rim, comprising:
an electric motor (12), preferably of an asynchronous type, having an output shaft or drive shaft (14) and capable of generating a rotation of a wheel or rather a rim/tyre assembly or the rim only about an axis (A), said assembly or the rim being carried by a rotating support (16) movable about said axis (A), said device comprising a tool (18) capable of cooperating with a bead of the tyre, a control device to deliver supply current to the electric motor (12), measuring means (24, 50) being provided, capable of measuring at least one characteristic of the motor (12) and/or the bead during the fitting/removal of the tyre, said measuring means (24, 50) being connected and sending data relating to that measured to a control unit (28) capable of controlling the supply current of the electric motor (12) on the basis of said data, **characterised in that** the control unit (28) is capable of continuously controlling said data generated by said measuring means and, on the basis of said data, automatically varying the supply current to the electric motor (12), to impart to said electric motor an optimum torque/speed combination based on the fitting/removal operating conditions so to maximize its rotational speed with the requested torque during all its operation period.

9. Device according to claim 8, wherein said measuring means are a measuring device (24) to measure the current absorbed by the electric motor (12).

10. Device according to claim 8, comprising a supporting arm (20) of the tool (18) for moving the tyre bead, wherein the measuring means are at least one sensor (50) associated with said supporting arm (20) capable of measuring the mechanical stresses transmitted to the tyre bead during the fitting and/or removal thereof onto/from the rim, the control unit (28) being connected to said sensor (50) to receive a representative signal of the mechanical stresses transmitted to the bead.

11. Device according to claim 8, wherein said measuring means are capable of measuring the speed of rotation of the motor, said means being preferably associated with the rotating support (16) of the wheel and/or rim, or with the drive shaft (14) of the electric motor (12), the control unit (28) being connected to said measuring means so as to receive a representative signal of the speed of rotation of the motor.

12. Device according to claim 8, wherein said measuring means are means to measure the resistive torque applied to the electric motor (12), said means being preferably associated with the rotating support (16) to support the wheel and/or rim, or with the drive shaft (14) of the electric motor (12), the control unit (28) being connected to said means in order to measure the resistive torque applied to the motor, to receive a representative signal of the resistive torque applied to the electric motor (12).

13. Device according to claim 8, wherein the control unit (28) comprises a microprocessor, said unit being part of a control device (26) also comprising a command device (32) provided with power switches to control the motor's supply current.

14. Device according to claims 9 and 13, wherein the control device (26) also comprises the measuring device (24) of the current absorbed by the electric motor (12).

15. Device according to claim 8, also comprising a speed selector device, to selectively control the operation of the electric motor (12) between a first configuration, wherein the motor is run at a pre-set working speed, and at least one additional configuration, wherein the motor is run at a variable speed determined automatically, in order to optimise the torque and speed characteristics on the basis of the fitting/removal operating conditions.

16. Device according to claim 10, wherein the tool (18) for moving the tyre bead is a fitting/removal tool or a bead-breaking tool, preferably of the rotating disc type.

## Patentansprüche

1. Verfahren zum Anbringen eines Reifens auf einer Felge oder zum Abnehmen eines Reifens aus einer Felge, worin ein Rad oder vielmehr eine Reifen/Felge-Baugruppe oder nur die Felge durch einen Elektromotor (12), vorzugsweise einen Asynchronmotor, um eine Achse (A) gedreht wird, und worin der Versorgungsstrom des Elektromotors (12) durch die Änderung der Frequenz und/oder der Amplitude und/oder der Versorgungsspannung des genannten Motors (12) gesteuert wird, **dadurch gekennzeichnet, dass** der genannte Strom ständig überwacht wird und dass der Versorgungsstrom automatisch verändert wird, um dem Elektromotor (12) die bestmögliche Drehkraft/Geschwindigkeit-Kombination je nach den Anbringen/Abnehmen-Arbeitsbedingungen zu verleihen, wobei die genannte Stromsänderung dem Motor erlaubt, derart zu laufen, dass dessen Drehzahl mit der angeforderten Drehkraft durch den ganzen Betrieb maximiert ist.

2. Verfahren nach Anspruch 1, worin die Anbringen/Abnehmen-Arbeitsbedingungen mindestens anhand der Stromaufnahme durch den Elektromotor (12) gemessen werden.

3. Verfahren nach Anspruch 1, worin die Anbringen/Abnehmen-Arbeitsbedingungen mindestens anhand der auf den Elektromotor (12) angewandten Widerstandsdrehkraft gemessen werden.

4. Verfahren nach Anspruch 1, worin die Anbringen/Abnehmen-Arbeitsbedingungen mindestens anhand der Drehzahl des Elektromotors (12) gemessen werden.

5. Verfahren nach Anspruch 1, worin die Anbringen/Abnehmen-Arbeitsbedingungen mindestens anhand der mechanischen Belastungen, die von einem Werkzeug (18) zur Bewegung eines Reifenwulstes zu dem genannten Reifenwulst übermittelt sind, gemessen werden.

6. Verfahren nach Anspruch 1, worin die bestmögliche Drehkraft/Geschwindigkeit-Kombination derart gewählt wird, dass die Geschwindigkeit des Elektromotors(12) und/oder die durch den genannten Motor (12) gelieferte Leistung maximiert werden und/oder der Stromverbrauch des genannten Motors (12) und/oder das Betriebsgeräusch des Elektromotors (12) minimiert werden.

7. Verfahren nach Anspruch 1, worin der Versorgungsstrom des Elektromotors (12) automatisch verändert wird, um dem genannten Motor eine Geschwindigkeit zwischen einem Mindestwert von ungefähr 900 U/min und einem Höchstwert von ungefähr 4500 U/min zu verleihen.

8. Vorrichtung (10) zum Anbringen eines Reifens auf einer Felge oder zum Abnehmen eines Reifens aus einer Felge, umfassend:
einen Elektromotor (12), vorzugsweise einen Asynchronmotor, der eine Ausgangswelle oder eine Antriebswelle (14) hat und in der Lage ist, die Drehung eines Rades oder vielmehr einer Reifen/Felge-Baugruppe oder nur der Felge um eine Achse (A) zu erzeugen, wobei die genannte Gruppe oder Felge durch eine drehbare, um die genannte Achse (A) bewegbare Unterstützung (16) getragen ist, wobei die genannte Vorrichtung ein Werkzeug (18) umfasst, das in der Lage ist, mit einem Reifenwulst mitzuwirken, eine Steuereinrichtung zur Lieferung des Versorgungsstroms zu dem Elektromotor (12), wobei Messmittel (24, 50) vorgesehen sind, die in der Lage sind, mindestens eine Eigenschaft des Motors (12) und/oder des Reifenwulstes beim Anbringen/Abnehmen des Reifens zu messen, wobei die genannten Messmittel (24, 50) verbunden sind und die Daten über der gemessenen Eigenschaft zu einer Steuereinheit (28) übermittelt, wobei die Steuereinheit in der Lage ist, den Versorgungsstrom des Elektromotors (12) je nach diesen Daten zu steuern, **dadurch gekennzeichnet, dass** die Steuereinheit (28) in der Lage ist, die genannten, von den genannten Messmitteln erzeugten Daten ständig zu kontrollieren und, je nach den genannten Daten, den Versorgungsstrom des Elektromotors (12) automatisch zu ändern, um dem genannten Elektromotor die bestmögliche Drehkraft/Geschwindigkeit-Kombination je nach den Anbringen/Abnehmen-Arbeitsbedingungen zu verleihen, so dass dessen Drehzahl mit der angeforderten Drehkraft durch den ganzen Betrieb maximiert ist.

9. Vorrichtung nach Anspruch 8, worin die genannten Messmittel eine Messeinrichtung (24) zum Messen des durch den Elektromotor (12) aufgenommenen Stroms sind.

10. Vorrichtung nach Anspruch 8, umfassend einen Tragarm (20) des Werkzeugs (18) zur Bewegung des Reifenwulstes, worin die Messmittel mindestens aus einem mit dem genannten Tragarm (20) verbundenen Sensor (50) bestehen, der in der Lage ist, die zum Reifenwulst beim Anbringen und/oder Abnehmen davon auf/von der Felge übermittelten mechanischen Belastungen zu messen, wobei die Steuereinheit (28) mit dem genannten Sensor (50) verbunden ist, um ein Signal der zu dem Reifenwulst übermittelten mechanischen Belastungen zu empfangen.

11. Vorrichtung nach Anspruch 8, worin die genannten Messmittel in der Lage sind, die Drehzahl des Motors zu messen, wobei die genannten Mittel vorzugsweise mit der drehbaren Unterstützung (16) des Rades und/oder der Felge, oder mit der Antriebswelle (14) des Elektromotors (12), verbunden sind, wobei die Steuereinheit (28) mit den genannten Messmitteln derart verbunden ist, dass sie ein Signal der Drehzahl des Motors empfängt.

12. Vorrichtung nach Anspruch 8, worin die genannten Messmittel die auf den Elektromotor (12) angewandte Widerstandsdrehkraft messen, wobei die genannten Mittel vorzugsweise mit der drehbaren Unterstützung (16) des Rades und/oder der Felge, oder mit der Antriebswelle (14) des Elektromotors (12), verbunden sind, wobei die Steuereinheit (28) mit den genannten Messmitteln derart verbunden ist, dass sie die auf den Elektromotor (12) angewandte Widerstandsdrehkraft messt und ein Signal der auf den Elektromotor (12) angewandten Widerstandsdrehkraft empfängt.

13. Vorrichtung nach Anspruch 8, worin die Steuereinheit (28) einen Mikroprozessor umfasst, wobei die genannte Einheit ein Teil einer Steuereinrichtung (26) ist, die ein Bediengerät (32) umfasst, das mit Netzschaltern zur Steuerung des Versorgungsstroms des Motors versehen ist.

14. Vorrichtung nach Ansprüchen 9 und 13, worin die Steuereinrichtung (26) die Messeinrichtung (24) zum Messen des durch den Elektromotor (12) aufgenommenen Stroms auch umfasst.

15. Vorrichtung nach Anspruch 8, die ein Geschwindigkeitswahlschalter auch umfasst, um der Elektromotor (12) zwischen einer ersten Gestaltung, worin der Motor mit einer vorgegebenen Arbeitsgeschwindigkeit läuft, und mindestens einer weiteren Gestaltung, worin der Motor mit einer automatisch bestimmten veränderlichen Geschwindigkeit läuft, selektiv betreiben, um die Drehkraft- und Geschwindigkeit-Eigenschaften je nach den Anbringen/Abnehmen-Arbeitsbedingungen zu optimieren.

16. Vorrichtung nach Anspruch 10, worin das Werkzeug (18) zur Bewegung des Reifenwulstes aus einem Anbringen/Abnehmen-Werkzeug oder aus einer Abdrückvorrichtung, vorzugsweise von Drehscheibe-Typ, besteht.

## Revendications

1. Procédé pour monter un pneumatique sur une jante ou pour démonter un pneumatique d'une jante, où un moteur électrique (12), préférablement de type asynchrone, met une roue ou plutôt un ensemble pneumatique/jante ou bien seulement la jante en rotation autour d'un axe (A), et où le courant d'alimentation du moteur électrique (12) est contrôlé par la variation de la fréquence et/ou de l'amplitude et/ou de la tension d'alimentation dudit moteur (12), **caractérisé en ce qu'**il est prévu que ledit courant est surveillé continuellement et que le courant d'alimentation est varié automatiquement pour conférer au moteur électrique (12) une combinaison couple/vitesse optimale selon les conditions opérationnelles de montage/démontage, ladite variation de courant permettant au moteur de fonctionner dans des conditions où sa vitesse de rotation est maximisée avec le couple demandé pendant tout le temps de fonctionnement.

2. Procédé selon la revendication 1, où les conditions opérationnelles de montage/démontage sont mesurées au moins sur la base de l'absorption de courant par le moteur électrique (12).

3. Procédé selon la revendication 1, où les conditions opérationnelles de montage/démontage sont mesurées au moins sur la base du couple résistif appliqué au moteur électrique (12).

4. Procédé selon la revendication 1, où les conditions opérationnelles de montage/démontage sont mesurées au moins sur la base de la vitesse de rotation du moteur électrique (12).

5. Procédé selon la revendication 1, où les conditions opérationnelles de montage/démontage sont mesurées au moins sur la base des sollicitations mécaniques transmises par un outil (18) pour déplacer un talon de pneumatique audit talon de pneumatique.

6. Procédé selon la revendication 1, où la combinaison couple/vitesse optimale est sélectionnée de façon à maximiser la vitesse du moteur électrique (12) et/ou la puissance délivrée par ledit moteur (12) et/ou minimiser la consommation d'électricité dudit moteur (12) et/ou le bruit de fonctionnement du moteur électrique (12).

7. Procédé selon la revendication 1, où le courant d'alimentation du moteur électrique (12) est varié automatiquement pour conférer audit moteur une vitesse comprise entre une valeur minimale d'environ 900 tr/min et une valeur maximale d'environ 4500 tr/min.

8. Dispositif (10) pour monter un pneumatique sur une jante ou pour démonter un pneumatique d'une jante, comprenant:
un moteur électrique (12), préférablement de type asynchrone, ayant un arbre de sortie ou un arbre de transmission (14) et à même de générer une rotation d'une roue ou plutôt d'un ensemble jante/pneumatique ou bien seulement de la jante autour d'un axe (A), ledit ensemble ou ladite jante étant transportés par un support rotatif (16) mobile autour dudit axe (A), ledit dispositif comprenant un outil (18) à même de coopérer avec un talon du pneumatique, un dispositif de contrôle pour délivrer le courant d'alimentation au moteur électrique (12), des moyens de mesure (24, 50) étant prévus, à même de mesurer au moins une caractéristique du moteur (12) et/ou du talon pendant le montage/démontage du pneumatique, lesdits moyens de mesure (24, 50) étant reliés et envoyant des données relatives à la caractéristique mesurée à une unité de contrôle (28) à même de contrôler le courant d'alimentation du moteur électrique (12) sur la base desdites données, **caractérisé en ce que** l'unité de contrôle (28) est à même de contrôler continuellement lesdites données générées par lesdits moyens de mesure et, sur la base desdites données, de varier automatiquement le courant d'alimentation au moteur électrique (12), pour conférer audit moteur électrique une combinaison couple/vitesse optimale selon les conditions opérationnelles de montage/démontage, de façon à maximiser sa vitesse de rotation avec le couple demandé pendant tout le temps de fonctionnement.

9. Dispositif selon la revendication 8, où les moyens de mesure sont un dispositif de mesure (24) pour mesurer le courant absorbé par le moteur électrique (12).

10. Dispositif selon la revendication 8, comprenant un bras de soutien (20) de l'outil (18) pour déplacer le talon du pneumatique, où les moyens de mesure sont au moins un capteur (50) associé audit bras de soutien (20) à même de mesurer les sollicitations mécaniques transmises au talon du pneumatique pendant le montage et/ou démontage du même sur/de la jante, l'unité de contrôle (28) étant reliée audit capteur (50) pour recevoir un signal représentatif des sollicitations mécaniques transmises au talon.

11. Dispositif selon la revendication 8, où les moyens de mesure sont à même de mesurer la vitesse de rotation du moteur, lesdits moyens étant préférablement associés au support rotatif (16) de la roue et/ou de la jante, ou bien à l'arbre de transmission (14) du moteur électrique (12), l'unité de contrôle (28) étant reliée auxdits moyens de mesure de façon à recevoir un signal représentatif de la vitesse de rotation du moteur.

12. Dispositif selon la revendication 8, où lesdits moyens de mesure sont des moyens pour mesurer le couple résistif appliqué au moteur électrique (12), lesdits moyens étant préférablement associés au support rotatif (16) pour soutenir la roue et/ou la jante, ou bien à l'arbre de transmission (14) du moteur électrique (12), l'unité de contrôle (28) étant reliée auxdits moyens pour mesurer le couple résistif appliqué au moteur, de façon à recevoir un signal représentatif du couple résistif appliqué au moteur électrique (12).

13. Dispositif selon la revendication 8, où l'unité de contrôle (28) comprend un microprocesseur, ladite unité étant partie d'un dispositif de contrôle (26), à son tour comprenant un dispositif de commande (32) pourvu d'interrupteurs d'alimentation pour contrôler le courant d'alimentation du moteur.

14. Dispositif selon les revendications 9 et 13, où le dispositif de contrôle (26) comprend aussi le dispositif de mesure (24) du courant absorbé par le moteur électrique (12).

15. Dispositif selon la revendication 8, comprenant aussi un dispositif sélecteur de vitesse pour contrôler sélectivement le fonctionnement du moteur électrique (12) entre une première configuration, où le moteur fonctionne à une vitesse de travail prédéfinie, et au moins une configuration supplémentaire, où le moteur fonctionne à une vitesse variable déterminée automatiquement pour optimiser les caractéristiques de couple et de vitesse selon les conditions opérationnelles de montage/démontage.

16. Dispositif selon la revendication 10, où l'outil (18) pour déplacer le talon du pneumatique est un outil de montage/démontage ou un outil détalonneur, préférablement du type à disque rotatif.
